# EUROPÄISCHE PATENTSCHRIFT

(11) **EP 2 550 903 B1**
(45) Veröffentlichungstag und Bekanntmachung des Hinweises auf die Patenterteilung: **02.07.2014**
(21) Anmeldenummer: 12175939.3
(22) Anmeldetag: 11.07.2012
(51) Int. Cl.: A47J 31/46

(54) **Getränkespender**
Beverage dispenser
Distributeur de boissons

(30) Priorität: 29.07.2011 DE 102011080095
(43) Veröffentlichungstag der Anmeldung: 30.01.2013
(73) Patentinhaber: BSH Bosch und Siemens Hausgeräte GmbH, 81739 München (DE)
(72) Erfinder: Gruber, Michael, 83362 Surberg (DE); Heilmaier, Marion, 83317 Teisendorf (DE); Kusstatscher, Herbert, 83371 Stein a.d. Traun (DE)

(56) Entgegenhaltungen:
- GB-A- 2 323 307
- US-A- 3 878 360
- US-A1- 2006 112 830

## Beschreibung

Die Erfindung betrifft einen Getränkespender nach dem Oberbegriff des Patentanspruchs 1, wobei dieser einen Getränkeauslauf zur Entnahme eines zubereiteten Getränks und eine Gehäusefront zur Begrenzung eines Geräteinnenraums aufweist.

Ein Getränkespender ist beispielsweise in der US 5,217,288 gezeigt. Der Getränkespender dient zum Erwärmen von Wasser und hat einen Getränkeauslauf zur Entnahme des Heißwassers und eine Gehäusefront zur Begrenzung eines Geräteinnenraums. Zur Aufnahme des Geräteauslaufs hat der Getränkespender einen mehrteiligen Kopfabschnitt, der zusammen mit einer kragarmartigen Wandung der Gehäusefront einen Hohlraum definiert. Zum Durchführen des Getränkeauslaufs aus dem Hohlraum und zur Anordnung einer Austrittsdüse ist in der Wandung eine Bohrung vorgesehen. Zur Montage des Getränkeauslaufs wird dieser mit seinem einen Endabschnitt zuerst an einem Wassertankauslauf befestigt und anschließend mit seinem freien Endabschnitt durch die Bohrung gefädelt, auf dem dann die Austrittsdüse aufgeschoben wird. Aufgrund des begrenzten Hohlraums und der Vielzahl von Montageschritten sind die Montage und ebenso die Demontage jedoch sehr zeitintensiv.

Weiterer Stand der Technik ist in der US 3 878 360 A, GB 2 323 307 A und in der US 2006/112830 A1 gezeigt. Dieser Stand der Technik offenbart Getränkespender mit jeweils einem Getränkeauslauf, der in eine umfangsseitig geschlossene Öffnung in Vertikalrichtung eingesetzt wird.

Aufgabe der Erfindung ist es, einen Getränkespender zu schaffen, der die vorgenannten Nachteile beseitigt und eine einfache Montage eines Getränkeauslaufs ermöglicht.

Diese Aufgabe wird gelöst durch einen Getränkespender mit den Merkmalen des Patentanspruchs 1. Vorteilhafte Aus- und Weiterbildungen sind Gegenstand der abhängigen Ansprüche.

Ein erfindungsgemäßer Getränkespender hat einen Getränkeauslauf zur Entnahme eines zubereiteten Getränks und eine Gehäusefront zur Begrenzung eines Geräteinnenraums. Der Getränkeauslauf hat einen Abschnitt zur Verbindung mit einer flexiblen geräteinternen Getränkezuführung und die Gehäusefront hat einen integralen kragarmartigen Kopfabschnitt, der einen Hohlraum zur Aufnahme des Getränkeauslaufs definiert und in einer Bodenwandung einen Durchbruch zum Durchreichen einer Austrittsdüse des Getränkeauslaufs aufweist, der zum Geräteinnenraum hin geöffnet ist. Erfindungsgemäß ist im Bereich des Durchbruchs eine Schiebekulisse mit einem Einschubbereich zur Aufnahme des Getränkeauslaufs angeordnet und der Getränkeauslauf hat ein Führungselement zum Einschieben in den Durchbruch.

Ein derartiger Getränkespender ermöglicht eine bequeme Montierbarkeit des Getränkeauslauf, da dieser außerhalb des begrenzten Hohlraums mit der geräteinternen Zuführung versehen werden kann und dann schnell und einfach vormontiert in dem Durchbruch platziert werden kann. Eine Zuhilfenahme aufwändiger Werkzeuge ist nicht notwendig. Durch die Schiebekulisse lässt sich das Einführen des Getränkeauslaufs in den Einschubbereich vereinfachen.

Die Teileanzahl und die Teilevielfalt des Gerätespenders lässt sich reduzieren, wenn der Getränkeauslauf im montierten Zustand den Durchbruch verschließt.

Zur Schaffung von leicht zu reinigenden Außenflächen ist es vorteilhaft, wenn der Getränkeauslauf mit der Bodenwandung eine bündige Sichtfläche bildet.

Um den Getränkeauslauf möglichst kompakt ausführen zu können, kann die Schiebekulisse den Durchbruch abschnittsweise abdecken.

Das Einführen des Getränkeauslaufs in den Einschubbereich lässt sich vereinfachen, wenn dieser in Einschubrichtung trichterförmig verjüngt ist.

Zur Führung in der Schiebekulisse kann der Getränkeauslauf eine seitlich und kopfseitig umlaufende Führungsnut zum Aufschieben auf die Schiebekulisse aufweisen. Der Getränkeauslauf umgreift den Einschubbereich begrenzende Randabschnitte und ist somit an der Schiebekulisse in Hochrichtung des Getränkespenders lagegesichert.

Zur Stabilisierung der Bodenwandung im Bereich des Durchbruchs kann die Schiebekulisse über eine Seitenwandung im Mündungsbereich des Durchbruchs in den Geräteinnenraum von der Bodenwandung beabstandet und in Einschubrichtung in Richtung der Bodenwandung orientiert sein.

Zum Zusammenwirken mit einer derartig orientierten Schiebekulisse kann die Führungsnut des Getränkeauslaufs seitliche Nutabschnitte aufweisen, die in Einschubrichtung schräg zur Längsachse des Getränkeauslaufs angestellt sind.

Zur Lagesicherung des Getränkeauslaufs in der Schiebekulisse können Rastelemente zum lösbaren Verrasten des Getränkeauslaufs mit der Schiebekulisse vorgesehen sein.

Bevorzugterweise sind die Rastelemente derart angeordnet, dass die Verrastung seitlich des Mündungsbereichs des Durchbruchs erfolgt. Hierdurch kann die Verrastung im unwahrscheinlichen Fall eines Verklemmens des Getränkeauslaufs an der Schiebekulisse leicht mit einem Werkzeug geöffnet werden.

Eine fertigungstechnisch einfach herzustellende Verrastung lässt sich dadurch erzielen, dass im Bereich der Schiebekulisse Rastvorsprünge und im Bereich der Führungsnuten Rastnasen ausgebildet sind.

Die Erfindung eignet sich insbesondere zur Bereitstellung eines Getränkespenders, dessen Getränkeauslauf mit einem sehr geringen technischen Aufwand montiert und demontiert werden kann.

Eine Gehäusefront für einen erfindungsgemäßen Getränkespender hat einen integralen Kopfabschnitt, in dessen Bodenwandung ein zum Geräterinnenraum hin geöffneter Durchbruch zum Einschieben eines Getränkeauslaufs ausgebildet ist. Eine derartige Gehäusefront ermöglicht eine einfache und schnelle Montage eines Getränkespenders, da keine zusätzliche Montageöffnung zur Montage des Getränkeauslaufs erforderlich ist.

Ein Getränkeauslauf für einen erfindungsgemäßen Getränkespender hat einen Abschnitt zur Verbindung mit einer flexiblen geräteinternen Getränkezuführung und ein Führungselement zum Einschieben in einen zum Geräteinnenraum einer Gehäusefront hin geöffneten Durchbruch. Ein derartiger Getränkeauslauf lässt sich bequem montieren, da er außerhalb des Durchbruchs mit der Getränkezuführung vormontiert und dann in dem Durchbruch durch eine Schiebebewegung bequem positioniert werden kann.

Im Folgenden wird ein bevorzugtes Ausführungsbeispiel der Erfindung anhand schematischer Darstellungen näher erläutert. Es zeigen:
- Figur 1: eine perspektivische Seitenansicht eines erfindungsgemäßen Getränkespenders,
- Figur 2: einen Längsschnitt durch einen Kopfabschnitt des Getränkespenders,
- Figur 3: eine perspektivische Darstellung eines Getränkeauslaufs des Getränkespenders,
- Figur 4: einen Montageschritt des Getränkeauslaufs, und
- Figur 5: den Getränkeauslauf im montierten Zustand.

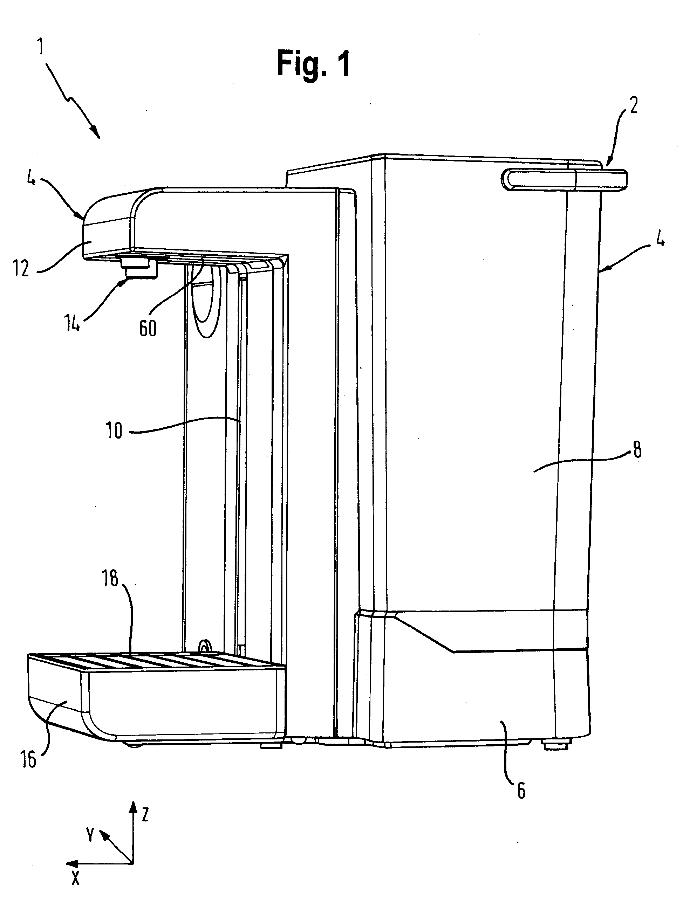

Gemäß der perspektivischen Darstellung in Figur 1 hat ein erfindungsgemäßer Getränkespender 1 zum Bereitstellen von warmen bzw. heißen Getränken ein mehrteiliges Gehäuse 2, das im Wesentlichen von einer Gehäusefront 4, einer nicht bezifferten Rückwand und einem rückwärtigen Gehäusesockel 6 zur Aufnahme eines Wassertanks 8 gebildet wird. Das Gehäuse 2 begrenzt einen Geräteinnenraum, in dem Elektronikbauteile, wasserführende Elemente wie Verschlauchungen und sonstige für den Betrieb des Getränkespenders 1 notwendige Systemkomponenten angeordnet sind. Bevorzugterweise wird der Getränkespender 1 zum Erwärmen von Wasser und somit zur Bereitstellung von Heißwasser verwendet.

Die Gehäusefront 4 begrenzt einen Zapfbereich und hat eine sich in Hochrichtung z des Getränkespenders 1 erstreckende Vertikalwand 10, von der sich in Längsrichtung x des Getränkespenders 1 ein kragarmartiger Kopfabschnitt 12 zur Aufnahme eines Getränkeauslaufs 14 zur Entnahme von Heißwasser erstreckt. Zum Abstellen eines Gefäßes zum Auffangen des Heißwassers ist fußseitig der Vertikalwand 10 eine Tropfschale 16 mit einem Abstellgitter 18 angeordnet, die formschlüssig mit der Vertikalwand 10 lösbar verrastet ist.

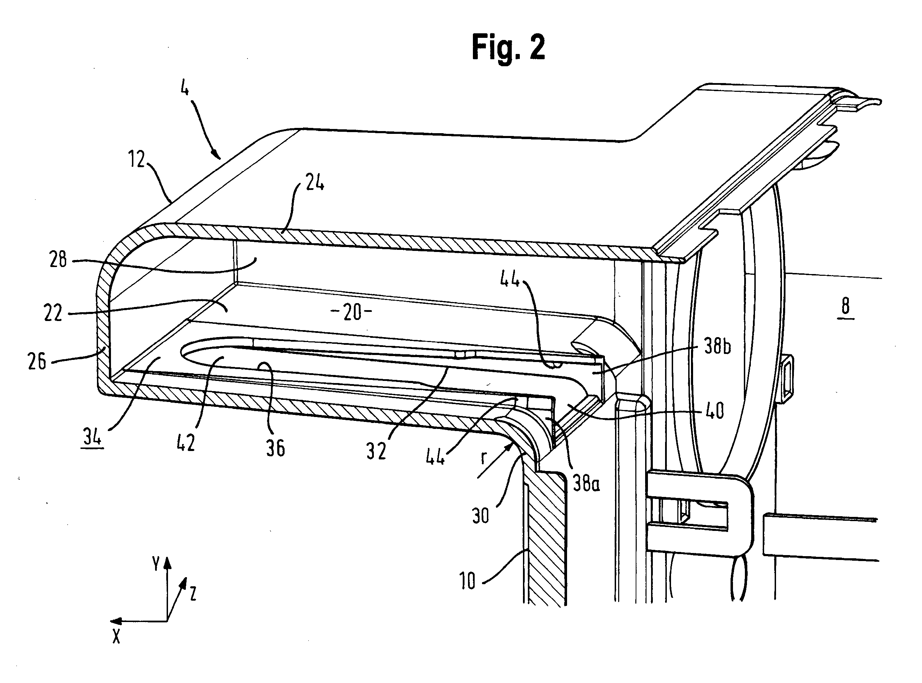

Wie in Figur 2 gezeigt, ist der Kopfabschnitt 12 integral an der Gehäusefront 4 ausgebildet. Er definiert einen Hohlraum 20, der zum Geräteinnenraum 8 hin geöffnet ist und von einer Bodenwandung 22, einer Deckenwandung 24, einer Stirnwandung 26 und zwei Seitenwandungen 28 begrenzt ist, von denen jedoch nur eine aufgrund der Schnittdarstellung sichtbar ist.

Die Bodenwandung 22 geht über einen bogenförmigen Übergangsabschnitt 30 mit einem Übergangsradius r in die Vertikalwand 10 über und weist einen Durchbruch 32 zur Aufnahme des Getränkeauslaufs 14 auf.

Der Durchbruch 32 erstreckt sich in Längsrichtung x und ist zum Geräteinnenraum 8 hin geöffnet. Zur Aufnahme des Getränkeauslaufs 14 und insbesondere zum Einschieben des Getränkeauslaufs 14 ist eine Schiebekulisse 34 vorgesehen, die den Durchbruch 32 abschnittsweise abdeckt und einen sich in Einschubrichtung trichterförmig verjüngenden Einschubbereich 36 aufweist. Die Anbindung der Schiebekulisse 34 an die Bodenwandung 22 erfolgt über zwei Seitenwandungen 38a, 38b, die sich in Einschubrichtung keilartig verjüngen, so dass die Schiebekulisse 34 im Mündungsbereich 40 des Durchbruchs 32 von der Bodenwandung 22 beabstandet ist und im Grundbereich 42 des Durchbruchs 32 bündig bzw. nahezu bündig in diese übergeht.

Zur Verrastung bzw. lösbaren Verriegelung des Getränkeauslaufs 14 mit der Schiebekulisse 34 im montierten Zustand ist seitlich des Mündungsbereichs 40 an gegenüberliegenden, den Einschubbereich begrenzenden Randabschnitten der Schiebekulisse jeweils ein sich in Hochrichtung z erstreckender Rastvorsprung 44 zum Zusammenwirken mit jeweils einer getränkeauslaufseitigen Rastnase 46 angeordnet. Selbstverständlich kann der Getränkeauslauf 14 auch reibschlüssig an der Schiebekulisse 3 gesichert werden. Hierzu können die Rastvorsprünge 44 entfallen und der Getränkeauslauf 14 greift mit seinen Rastnasen 46 reibend an den Randabschnitten der Schiebekulisse 34 an.

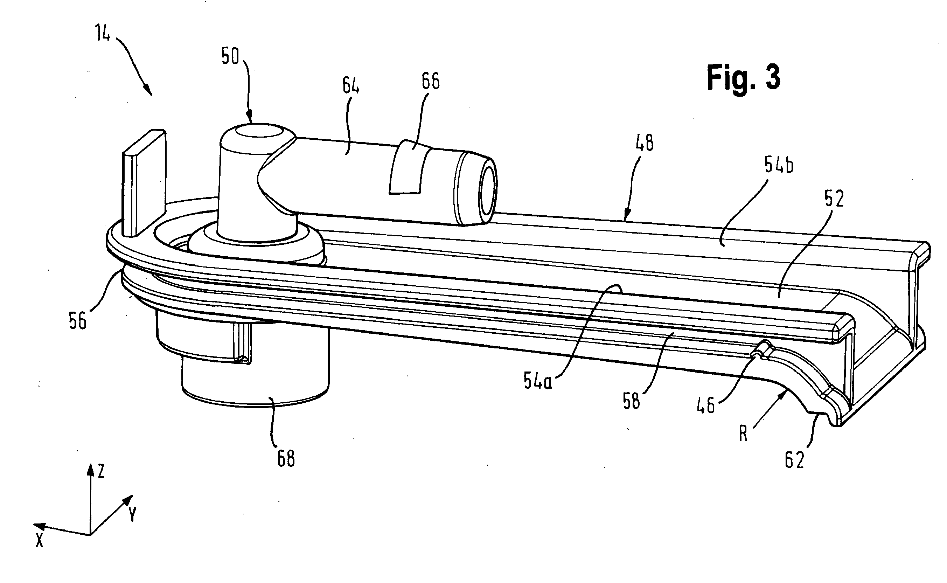

Wie in Figur 3 gezeigt, hat der Getränkeauslauf 14 ein längliches Führungselement 48 zur Aufnahme in der Schiebekulisse 34 und ein Auslaufelement 50 zur Entnahme des Getränks. Er ist vorzugsweise ein Kunststoffspritzgussteil und somit einstückig ausgebildet.

Das Führungselement 48 hat eine Grundplatte 52, von der sich zwei in Längsrichtung x des Getränkeauslaufs 14 erstreckende Seitenwandungen 54a, 54b und eine die Seitenwandungen 54a, 54b kopfseitig miteinander verbindende bogenförmige Stirnwandung 56 erstreckt. Heckseitig ist die Grundplatte 52 geöffnet. Die Seitenwandungen 54a, 54b sind entsprechend den Seitenwandungen 38a, 38b keilartig in Richtung der Stirnwandung 56 verjüngt ausgebildet.

Zum Zusammenwirken mit der Schiebekulisse 34 ist in den Wandungen 54a, 54b, 56 eine außenliegende und durchgehende Führungsnut 58 ausgebildet. Diese ist derart in die Wandungen 54a, 54b, 56 integriert, dass der Getränkeauslauf 14 mit der Bodenwandung 22 eine in Figur 1 bezifferte bündige Sichtfläche 60 bildet.

Zur Bildung eines stufenlosen Überganges zur Vertikalwand 10 ist die Grundplatte 52 heckseitig bogenförmig abgewinkelt, wodurch die Führungsnut 58 endseitig quasi keilförmig erweitert ist. Dabei entspricht ein Bogenradius R dem Übergangsradius r des Übergangsabschnitts 30. Zudem ist heckseitig eine Schulter 62 ausgebildet, mit der sich der Getränkeauslauf 14 an der Vertikalwand 10 abstützt.

Die Rastnasen 46 zur Verrastung mit den schiebekulissenseitigen Rastvorsprüngen 44 sind in Hochrichtung z orientiert und in seitlichen Nutabschnitten der Führungsnut 58 heckseitig angeordnet.

Das Auslaufelement 50 ist im Stirnbereich bzw. Kopfbereich der Grundplatte 52 angeordnet. Es durchsetzt die Grundplatte 52 und hat eine L-förmige Form mit einem sich in Längsrichtung X des Getränkeauslaufs 14 erstreckenden Endabschnitt 64 zur Anbindung der nicht gezeigten Verschlauchung bzw. einer flexiblen geräteinternen Getränkezuführung. Der Endabschnitt 64 ist in Montagerichtung konisch erweitert und weist zur Sicherung der Verschlauchung umfangsseitig zumindest einen Keilvorsprung 66 auf.

An seinem die Grundplatte 52 durchsetzenden Endabschnitt ist eine Austrittsdüse 68 zur Erzeugung eines einheitlichen, von der Durchflussmenge unabhängigen Strahlbildes angeordnet.

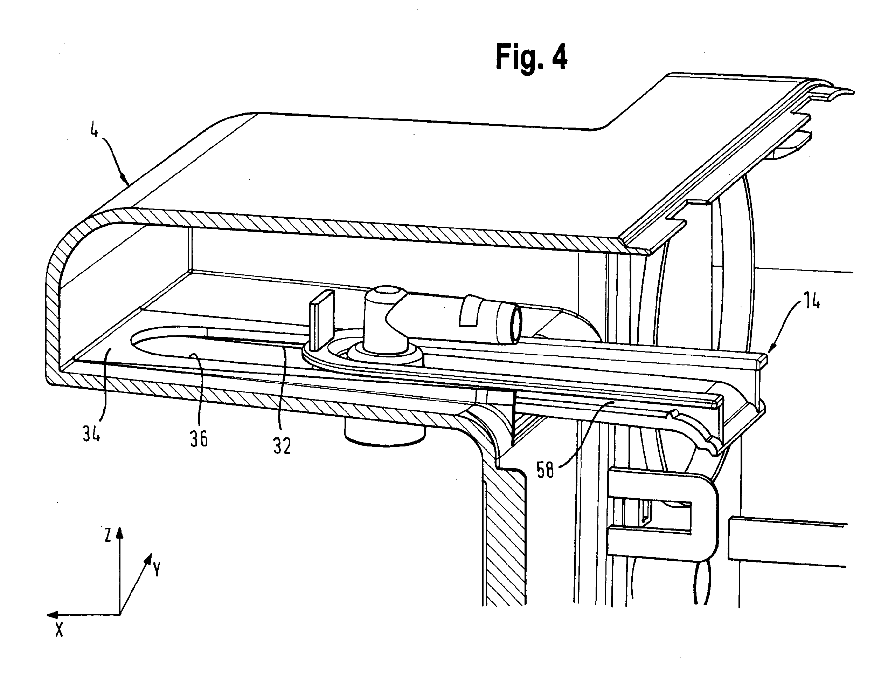

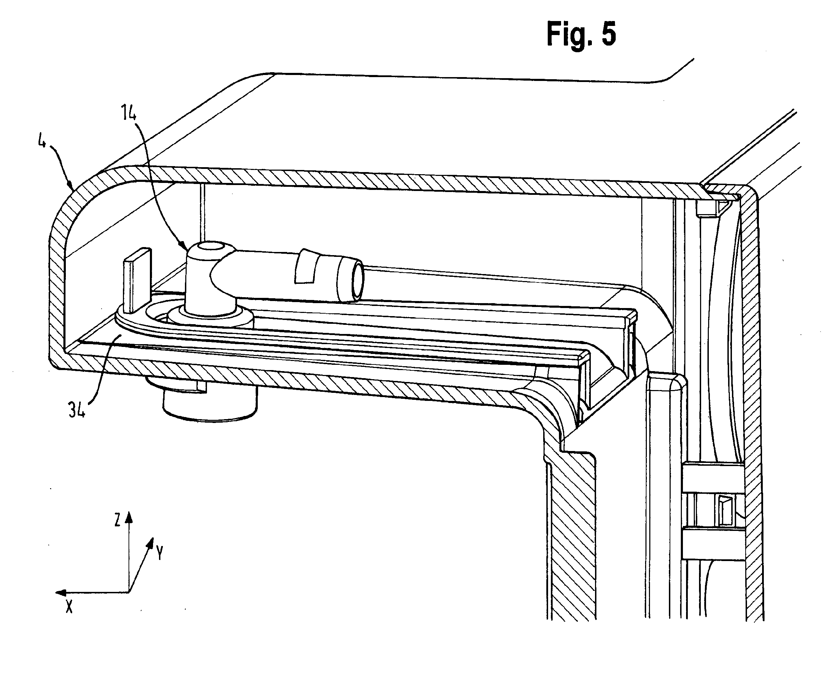

Zur Montage des Getränkeauslaufs 14 in dem Kopfabschnitt 12 bzw. an der Gehäusefront 4 wird der Getränkeauslauf 14 zuerst vormontiert. Hierzu wird die Verschlauchung auf den Endabschnitt 64 aufgeschoben. Dann wird der vormontierte Getränkeauslauf 14 im Mündungsbereich 40 des Durchbruchs 32 positioniert, wobei, wie in Figur 4 gezeigt, der Getränkeauslauf 14 über seine Führungsnut 58 in Schiebeeingriff mit den Randabschnitten der Schiebekulisse 34 gebracht wird. Der Getränkeauslauf 14 wird in Einschubrichtung bewegt und durch einen Wirkeingriff der Rastnasen 46 mit den Rastvorsprüngen 44 lösbar mit der Schiebekulisse 34 verriegelt. Der Getränkeauslauf 14 ist nun, wie in Figur 5 gezeigt, in der Schiebekulisse 34 lagefixiert und der Durchbruch 32 ist geschlossen. Zur Demontage wird der Getränkeauslauf 14 nach Überwindung einer Verriegelungskraft in Gegenrichtung bewegt und nach dem Lösen des Schiebeeingriffs die Verschlauchung von dem Getränkeauslauf 14 gelöst.

### Bezugszeichenliste

- 1: Getränkespender
- 2: Gehäuse
- 4: Gehäusefront
- 6: Gehäusesockel
- 8: Wassertank
- 10: Vertikalwand
- 12: Kopfabschnitt
- 14: Getränkeauslauf
- 16: Tropfschale
- 18: Abstellgitter
- 20: Hohlraum
- 22: Bodenwandung
- 24: Deckenwandung
- 26: Stirnwandung
- 28: Seitenwandung
- 30: Übergangsabschnitt
- 32: Durchbruch
- 34: Schiebkulisse
- 36: Einschubbereich
- 38a, b: Seitenwandung
- 40: Mündungsbereich
- 42: Grundbereich
- 44: Rastvorsprung
- 46: Rastnase
- 48: Führungselement
- 50: Auslaufelement
- 52: Grundplatte
- 54a, b: Seitenwandung
- 56: Stirnwandung
- 58: Führungsnut
- 60: Sichtfläche
- 62: Schulter
- 64: Endabschnitt
- 66: Keilvorsprung
- 68: Austrittsdüse

- z: Hochrichtung Getränkespender
- x: Längsachse Getränkespender
- X: Längsachse Getränkeauslauf
- r: Übergangsradius
- R: Bogenradius

## Patentansprüche

1. Getränkespender (1), mit einem Getränkeauslauf (14) zur Entnahme eines zubereiteten Getränks und mit einer Gehäusefront (4) zur Begrenzung eines Geräteinnenraums (8), wobei der Getränkeauslauf (14) einen Abschnitt (64) zur Verbindung mit einer flexiblen geräteinternen Getränkezuführung hat und die Gehäusefront (4) einen integralen kragarmartigen Kopfabschnitt (12) hat, der einen Hohlraum (20) zur Aufnahme des Getränkeauslaufs (14) definiert und in einer Bodenwandung (22) einen Durchbruch (32) zum Durchreichen einer Austrittdüse (68) des Getränkeauslaufs (14) aufweist, der zum Geräteinnenraum (8) hin geöffnet ist, **dadurch gekennzeichnet, dass** im Bereich des Durchbruchs (32) eine Schiebekulisse (34) mit einem Einschubbereich (36) zur Aufnahme des Getränkeauslaufs (14) angeordnet ist und der Getränkeauslauf (14) ein Führungselement (48) zur Aufnahme in der Schiebekulisse (34) hat.

2. Getränkespender nach Anspruch 1, wobei der Getränkeauslauf (14) im montierten Zustand den Durchbruch (32) verschließt.

3. Getränkespender nach Anspruch 1 oder 2, wobei der Getränkeauslauf (14) mit der Bodenwandung (22) eine bündige Sichtfläche (60) bildet.

4. Getränkespender nach Anspruch 1, 2 oder 3, wobei die Schiebekulisse (34) den Durchbruch (32) abschnittsweise abdeckt.

5. Getränkespender nach einem der vorhergehenden Ansprüche, wobei der Einschubbereich (36) in Einschubrichtung trichterförmig verjüngt ist.

6. Getränkespender nach einem der vorhergehenden Ansprüche, wobei der Getränkeauslauf (14) eine seitlich und kopfseitig umlaufende Führungsnut (58) zum Aufschieben auf die Schiebekulisse (34) aufweist.

7. Getränkespender nach einem der vorhergehenden Ansprüche, wobei die Schiebekulisse (34) über Seitenwandungen (54a, 54b) im Mündungsbereich (40) des Durchbruchs in den Geräteinnenraum (8) von der Bodenwandung (22) beabstandet ist und in Einschubrichtung in Richtung der Bodenwandung (22) orientiert ist.

8. Getränkespender nach Anspruch 7, wobei sich in Einschubrichtung erstreckende seitliche Nutabschnitte der Führungsnut (58) schräg zur Längsachse (x) des Getränkeauslaufs (14) angestellt sind.

9. Getränkespender nach einem der vorhergehenden Ansprüche, wobei Rastelemente (44, 46) zum lösbaren Verrasten des Getränkeauslauf (14) mit der Schiebekulisse (34) vorgesehen sind.

10. Getränkespender nach Anspruch 9, wobei die Rastelemente (44, 46) derart angeordnet sind, dass die Verrastung seitlich des Mündungsbereich (40) des Durchbruchs (32) erfolgt.

11. Getränkespender nach Anspruch 9 oder 10, wobei im Bereich der Schiebekulisse (34) Rastvorsprünge (44) und im Bereich der Führungsnut (58) Rastnasen (46) ausgebildet sind.

## Claims

1. Beverage dispenser (1), having a beverage spout (14) for extracting a prepared beverage and having a housing front (4) for delimiting a device interior (8), wherein the beverage spout (14) has a section (64) for connection with a flexible device-internal beverage supply and the housing front (4) has an integral cantilever-type head section (12) that defines a cavity (20) for accommodating the beverage spout (14) and has in a base wall (22) an aperture (32) for passing through an outlet nozzle (68) of the beverage spout (14) that is open towards the device interior (8), **characterised in that** in the vicinity of the aperture (32) a slide-in cover (34) having an insertion area (36) for receiving the beverage spout (14) is arranged and the beverage spout (14) has a guide element (48) for receiving the slide-in cover (34).

2. Beverage dispenser according to claim 1, wherein the beverage spout (14) seals the aperture (32) in the assembled state.

3. Beverage dispenser according to claim 1 or 2, wherein the beverage spout (14) forms a flush visible surface (60) with the base wall (22).

4. Beverage dispenser according to claim 1, 2 or 3, wherein the slide-in cover (34) partially covers the aperture (32).

5. Beverage dispenser according to one of the preceding claims, wherein the insertion area (36) is narrowed in the shape of a funnel in the direction of insertion.

6. Beverage dispenser according to one of the preceding claims, wherein the beverage spout (14) has on its sides and head end a circumferential guide groove (58) for sliding onto the slide-in cover (34).

7. Beverage dispenser according to one of the preceding claims, wherein the slide-in cover (34) is spaced from the base wall (22) by way of side walls (54a, 54b) in the mouth area (40) of the aperture into the device interior (8) and is oriented towards the base wall (22) in the direction of insertion.

8. Beverage dispenser according to claim 7, wherein side groove sections of the guide groove (58) extending in the direction of insertion are positioned transversely to the longitudinal axis (x) of the beverage spout (14).

9. Beverage dispenser according to one of the preceding claims, wherein locking elements (44, 46) are provided for removable locking of the beverage spout (14) to the slide-in cover (34).

10. Beverage dispenser according to claim 9, wherein the locking elements (44, 46) are arranged such that the locking takes place at the side of the mouth area (40) of the aperture (32).

11. Beverage dispenser according to claim 9 or 10, wherein catch tappets (44) are embodied in the vicinity of the slide-in cover (34) and catch lugs (46) are embodied in the vicinity of the guide groove (58).

## Revendications

1. Distributeur de boisson (1) comprenant une sortie de boisson (14) pour prélever une boisson préparée et comprenant une face de boîtier (4) destinée à délimiter un espace intérieur d'appareil (8), la sortie de boisson (14) ayant une section (64) permettant la liaison avec une alimentation de boisson flexible, interne à l'appareil, et la face de boîtier (4) ayant une section de tête intégrale (12) semblable à un bras en porte-à-faux, laquelle définit un espace creux (20) pour le logement de la sortie de boisson (14) et présente dans une paroi de fond (22) un passage (32) destiné à faire passer une buse de sortie (68) de la sortie de boisson (14), lequel passage est ouvert en direction de l'espace intérieur d'appareil (8), **caractérisé en ce qu'**une coulisse (34) munie d'une zone d'insertion (36) destinée à loger la sortie de boisson (14) est disposée dans la zone du passage (32) et **en ce que** la sortie de boisson (14) a un élément de guidage (48) pour le logement dans la coulisse (34).

2. Distributeur de boisson selon la revendication 1, la sortie de boisson (14) obturant le passage (32) à l'état monté.

3. Distributeur de boisson selon la revendication 1 ou 2, la sortie de boisson (14) formant une surface visible (60) à surface plane avec la paroi de fond (22).

4. Distributeur de boisson selon la revendication 1, 2 ou 3, la coulisse (34) recouvrant le passage (32) par sections.

5. Distributeur de boisson selon l'une quelconque des revendications précédentes, la zone d'insertion (36) se rétrécissant en forme d'entonnoir dans le sens d'insertion.

6. Distributeur de boisson selon l'une quelconque des revendications précédentes, la sortie de boisson (14) présentant une rainure de guidage continue (58) latéralement et côté tête pour coulisser sur la coulisse (34).

7. Distributeur de boisson selon l'une quelconque des revendications précédentes, la coulisse (34) étant distancée de la paroi de fond (22) par l'intermédiaire de parois latérales (54a, 54b) dans la zone d'embouchure (40) du passage dans l'espace intérieur d'appareil (8) et étant orientée en direction de la paroi de fond (22) dans le sens d'insertion.

8. Distributeur de boisson selon la revendication 7, des sections de rainure latérales de la rainure de guidage (58) s'étendant dans le sens d'insertion étant situées obliquement par rapport à l'axe longitudinal (x) de la sortie de boisson (14).

9. Distributeur de boisson selon l'une quelconque des revendications précédentes, des éléments d'enclenchement (44, 46) étant ménagés pour l'enclenchement amovible de la sortie de boisson (14) avec la coulisse (34).

10. Distributeur de boisson selon la revendication 9, les éléments d'enclenchement (44, 46) étant disposés de manière à ce que l'enclenchement ait lieu sur le côté de la zone d'embouchure (40) du passage (32).

11. Distributeur de boisson selon la revendication 9 ou 10, des saillies d'enclenchement (44) étant réalisées dans la zone de la coulisse (34) et des ergots d'enclenchement (46) étant réalisés dans la zone de la rainure de guidage (58).
